# EUROPEAN PATENT SPECIFICATION

(11) **EP 3 910 135 B1**
(45) Date of publication and mention of the grant of the patent: **12.10.2022**
(21) Application number: 20173908.3
(22) Date of filing: 11.05.2020
(51) Int. Cl.: E04H 4/12, C02F 1/68

(54) **SWIMMING POOL CHEMICAL DISPENSER**
CHEMIKALIENSPENDER FÜR SCHWIMMBECKEN
DISTRIBUTEUR DE PRODUITS CHIMIQUES DE PISCINE

(43) Date of publication of application: 17.11.2021
(73) Proprietor: Ningbo Bonny E-Home Co., Ltd., Ningbo City, Zhejiang 315000 (CN)
(72) Inventor: ZHANG, Hongchuan, Ningbo City, Zhejiang 315000 (CN)
(74) Representative: Cabinet Chaillot

(56) References cited:
- US-A1- 2012 255 893
- US-A1- 2015 368 128
- US-A1- 2017 356 209

## Description

### Technical Field

The present disclosure relates to the technical field of swimming pool auxiliary tools, in particular to a swimming pool chemical dispenser.

### Background

A swimming pool chemical dispenser is a product used in swimming pools to purify water, normally it comprises a barrel with a float inside, and the inner part of the barrel is provided with an accommodating cavity to store tablets. Due to the structure of the current product, a user needs to remove and place the tablets in the accommodating cavity with bare hand or with glove when replacing, and the irritating odor of the tablets may also potentially harm the health of the user. Meanwhile, during usage, the residual quantity of the tablets in the barrel cannot be visually observed, the user has to open the upper cover of the barrel from time to time for timely replacement or refill, which makes it extremely inconvenient.

US 2017/356209 A1 discloses a chemical dispenser according to the preamble of claim 1.

### Summary

One objective of the present disclosure is to overcome the shortcomings of the prior arts by disclosing a swimming pool chemical dispenser, with which it's visual and reliable to determine the remaining amount of the chemical to facilitate timely refill of the tablets, to overcome the above-mentioned technical deficiencies.

The specific technical scheme is as follows:
A swimming pool chemical dispenser, comprises a main body, an upper cover which covers the upper opening of the main body, an accommodating cavity for storing tablets is formed inside the main body; the swimming pool chemical dispenser further comprises a tablet clamp; the clamping end of the tablet clamp penetrates downward through the upper cover and abuts against the tablets, and the tablet clamp is provided with scales; the tablet clamp descends along with the dissolution of the tablets and displays the amount of residual chemical in the main body.

Preferably, the main body comprises a shell with an opening at the upper end, and the accommodating cavity is formed in the shell; the side wall of the shell is provided with at least one transparent window for direct observation of the residual chemical amount.

Preferably, the side wall of the shell is further provided with a thermometer for detecting the temperature of the water.

Preferably, the number of the transparent windows is two, and the thermometer is embedded within one of the two transparent windows.

Preferably, a bottom cover is screwed at the bottom of the shell, and the peripheral walls of the bottom cover and the bottom of the shell are respectively provided with grid structures.

Preferably, the shell comprises a barrel, an outer housing sleeved outside the barrel, and a region for mounting a float is formed between the barrel and the outer housing.

Preferably, the upper cover comprises an outer cover which covers the upper end of the shell, an inner cover arranged in the inner circle formed in the outer cover, and a channel for the tablet clamp to pass through is formed in the inner cover in a penetrating mode.

Preferably, the side wall of the inner circle of the outer cover sinks inwardly to form an annular step surface, and the lower end of the outer edge of the inner cover is placed on the annular step surface. Preferably, one side of the outer housing is provided with a ring structure.

The technical scheme has the beneficial effects that:
(1) The swimming pool chemical dispenser comprises a main body, an upper cover and a tablet clamp, and the tablet clamp is provided with scales, so that the amount of residual chemical can be visually and reliably determined from the scales on the tablet clamp for timely refill; the tablet clamp is placed on the main body, thus makes it convenient for the user to replace the tablets bare-handed without touching the tablets.
(2) The arrangement of the transparent window facilitates direct observation of the amount of chemical remaining within the dispenser.
(3) The arrangement of the thermometer facilitates testing and observing the water temperature.
(4) The peripheral walls of the bottom cover and the bottom of the shell are respectively provided with grid structures, thus the water inflow can be adjusted by the rotation of the bottom cover, and the effect of adjusting the release speed of the tablets is achieved.

### Brief Description of the Drawings

FIG. 1 is a perspective view of a swimming pool chemical dispenser of the present invention;
FIG. 2 is a cross-sectional view of the swimming pool chemical dispenser of the present invention;
FIG. 3 is an exploded view of the swimming pool chemical dispenser of the present invention;
FIG. 4 is an exploded view of the shell and the lower cover portion of the swimming pool chemical dispenser of the present invention;
FIG. 5 is a perspective view of the tablet clamp of the swimming pool chemical dispenser of the present invention.

### Embodiments

Various aspects of the illustrative embodiments herein will be described below using terms commonly employed by those skilled in the art to convey the substance of their work to others skilled in the art.

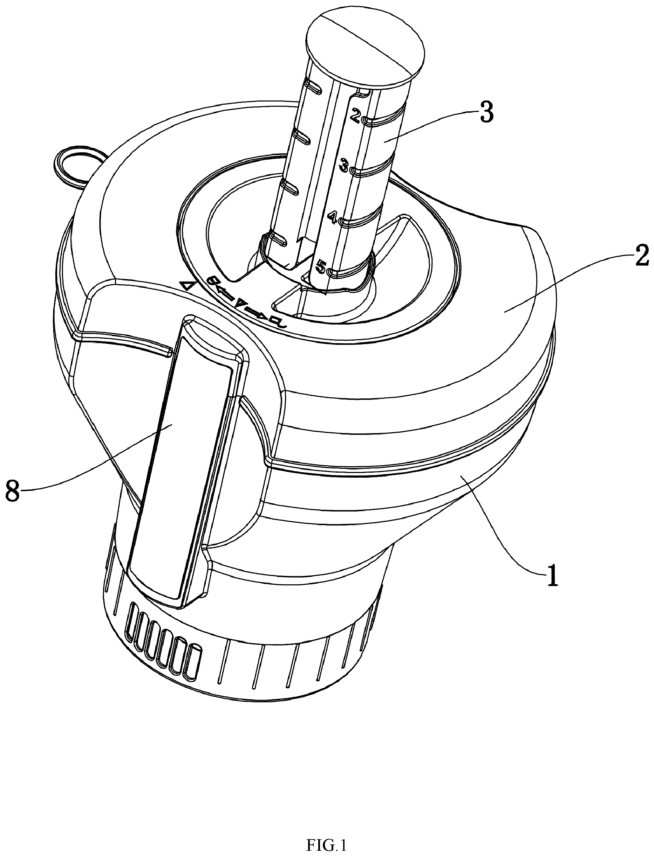

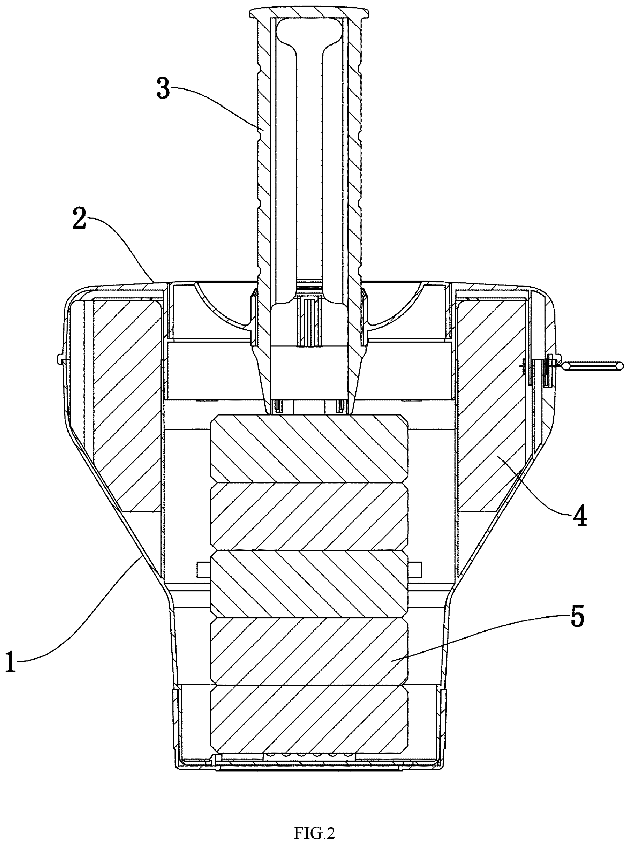

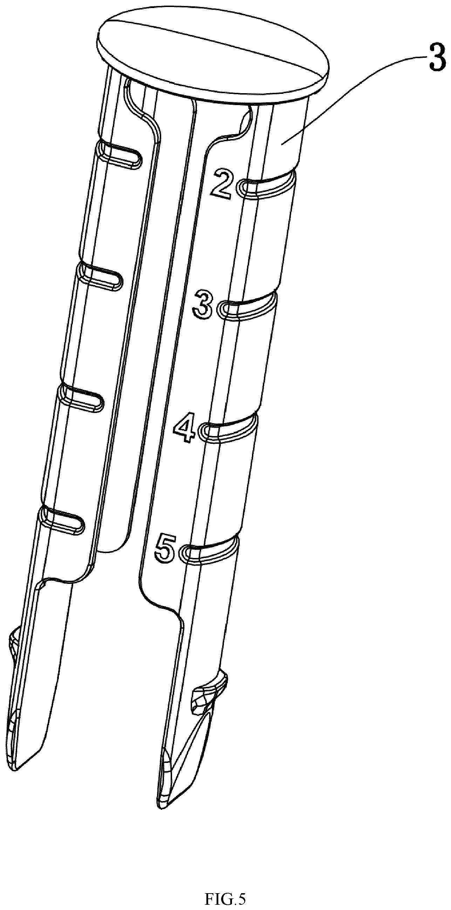

As shown in FIGs. 1-5, the swimming pool chemical dispenser in this embodiment comprises a main body 1, an upper cover 2 which covers the upper opening of the main body 1, an accommodating cavity for storing tablets 5 is formed inside the main body 1; the swimming pool chemical dispenser further comprises a tablet clamp 3; the clamping end of the tablet clamp 3 penetrates downward through the upper cover 2 and abuts against the tablets 5, and the tablet clamp 3 is provided with scales; the tablet clamp 3 descends along with the dissolution of the tablets 5 and displays the amount of residual chemical in the main body 1.

Based on the above technical scheme, the swimming pool chemical dispenser comprises a main body 1, an upper cover 2 and a tablet clamp 3, and the tablet clamp 3 is provided with scales, so that the amount of residual chemical can be visually and reliably determined from the scales on the tablet clamp 3 for timely refill of the tablets 5; the tablet clamp 3 is placed on the main body 1, thus makes it convenient for the user to replace the tablets 5 bare-handed without touching the tablets.

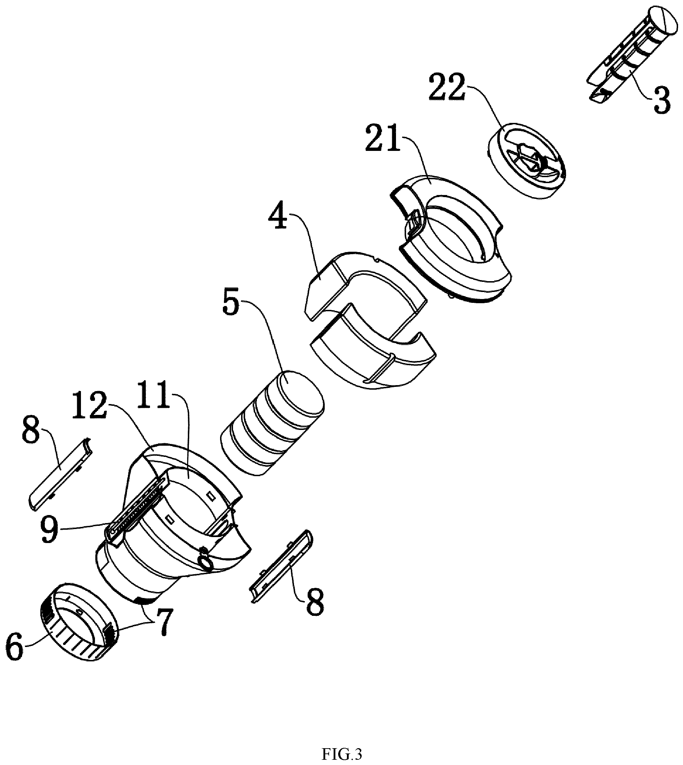

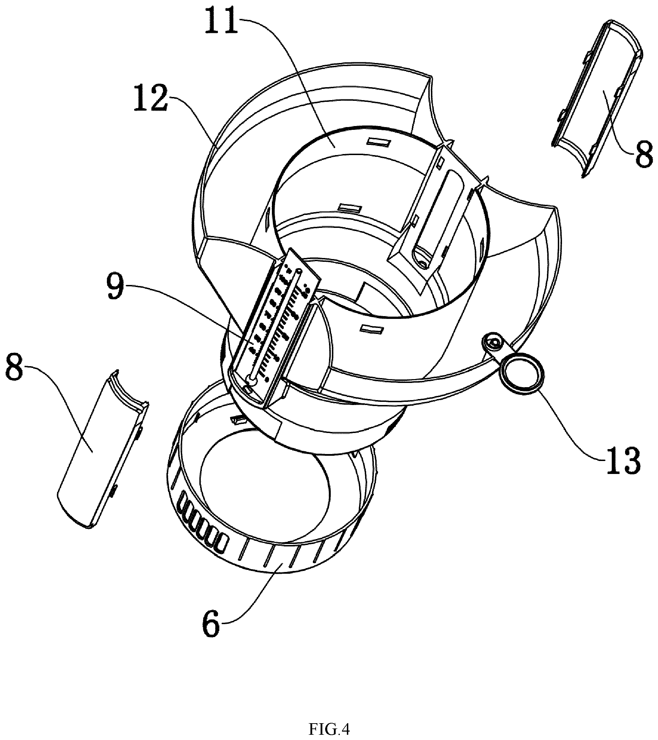

In a preferred embodiment, specifically as shown in FIG. 3 and FIG. 4, the main body 1 comprises a shell with an opening at the upper end, and the accommodating cavity is formed in the shell; the side wall of the shell is provided with at least one transparent window 8 for direct observation of the residual chemical amount. Further, the side wall of the shell is further provided with a thermometer 9 for detecting the temperature of the water. Further, the number of the transparent windows 8 is two, and the thermometer 9 is embedded within one of the two transparent windows 8. Apparently, one side of the side wall of the shell, the side of which facing the transparent window 8, is provided with an observation hole, and the bottom of the embedded thermometer 9 is provided with an opening allowing the water to flow inside and contact the hole at the temperature measuring end of the thermometer 9. Further, a bottom cover 6 is screwed at the bottom of the shell, and the peripheral walls of the bottom cover 6 and the bottom of the shell are respectively provided with grid structures 7. The water inflow can be adjusted by the rotation of the bottom cover 6, and the effect of adjusting the release speed of the tablets 5 is achieved.

In a further preferred embodiment, the shell comprises a barrel 11, an outer housing 12 sleeved outside the barrel 11, and a region for mounting a float 4 is formed between the barrel 11 and the outer housing 12. Further, the upper cover 2 comprises an outer cover 21 which covers the upper end of the shell, an inner cover 22 arranged in the inner circle formed in the outer cover 21, and a channel for the tablet clamp 3 to pass through is formed in the inner cover 22 in a penetrating mode. In a specific application, the inner cover 22 can be taken out from the outer cover 21 directly to expose the accommodating cavity, so that the tablets 5 can be easily replaced. The side wall of the inner circle of the outer cover 21 sinks inwardly to form an annular step surface, and the lower end of the outer edge of the inner cover 22 is placed on the annular step surface. Further, one side of the outer housing is provided with a ring structure, thus the chemical dispenser can be removed from the pool by means of a tool with a hook. Further, the scales are longitudinally arranged on the tablet clamp 3.

The foregoing is merely illustrative of the present invention and is not intended to be limiting. Those skilled in the art should appreciate that many changes, modifications, and even equivalents may be made therein without departing from the scope of the invention as defined by the appended claims.

## Claims

1. A swimming pool chemical dispenser, comprising a main body (1), an upper cover (2) which covers the upper opening of the main body (1), an accommodating cavity for storing tablets (5) is formed inside the main body (1); **characterized in that** the swimming pool chemical dispenser further comprises a tablet clamp (3); the clamping end of the tablet clamp (3) penetrates downward through the upper cover (2) and abuts against the tablets (5) in operation mode, and the tablet clamp (3) is provided with scales; the tablet clamp (3) is able to descend along with the dissolution of the tablets (5) and to display the amount of residual chemical in the main body (1).

2. The swimming pool chemical dispenser of claim 1, wherein the main body (1) comprises a shell with an opening at the upper end, and the accommodating cavity is formed in the shell; the side wall of the shell is provided with at least one transparent window (8) for direct observation of the residual chemical amount.

3. The swimming pool chemical dispenser of claim 2, wherein the side wall of the shell is further provided with a thermometer (9) for detecting the water temperature.

4. The swimming pool chemical dispenser of claim 3, wherein the number of the transparent windows (8) is two, and the thermometer (9) is embedded within one of the two transparent windows (8).

5. The swimming pool chemical dispenser of claim 2, wherein a bottom cover (6) is screwed at the bottom of the shell, and the peripheral walls of the bottom cover (6) and the bottom of the shell are respectively provided with grid structures (7).

6. The swimming pool chemical dispenser of claim 2, wherein the shell comprises a barrel (11), an outer housing (12) sleeved outside the barrel (11), and a region for mounting a float (4) is formed between the barrel (11) and the outer housing (12).

7. The swimming pool chemical dispenser of claim 2 , wherein the upper cover (2) comprises an outer cover (21) which covers the upper end of the shell, an inner cover (22) arranged in the inner circle formed in the outer cover (21), and a channel for the tablet clamp (3) to pass through is formed in the inner cover (22) in a penetrating mode.

8. The swimming pool chemical dispenser of claim 7, wherein the side wall of the inner circle of the outer cover (21) sinks inwardly to form an annular step surface, and the lower end of the outer edge of the inner cover (22) is placed on the annular step surface.

9. The swimming pool chemical dispenser of claim 6, wherein one side of the outer housing (12) is provided with a ring structure (13).

## Patentansprüche

1. - Chemikalienspender für Schwimmbecken, umfassend einen Hauptkörper (1), eine obere Abdeckung (2), die die obere Öffnung des Hauptkörpers (1) abdeckt, wobei ein Aufnahmehohlraum zum Aufbewahren von Tabletten (5) innerhalb des Hauptkörpers (1) gebildet ist; **dadurch gekennzeichnet, dass** der Chemikalienspender für Schwimmbecken weiter eine Tablettenklemme (3) umfasst; das Klemmende der Tablettenklemme (3) nach unten durch die obere Abdeckung (2) eindringt und gegen die Tabletten (5) im Betriebsmodus anstößt, und die Tablettenklemme (3) einer Skala ausgestattet ist; die Tablettenklemme (3) dazu in der Lage ist, zusammen mit der Auflösung der Tabletten (5) abzusinken und die Menge der restlichen Chemikalien im Hauptkörper (1) anzuzeigen.

2. - Chemikalienspender für Schwimmbecken nach Anspruch 1, wobei der Hauptkörper (1) eine Schale mit einer Öffnung am oberen Ende umfasst und der Aufnahmehohlraum in der Schale gebildet ist; die Seitenwand der Schale mit mindestens einem transparenten Fenster (8) für die direkte Beobachtung der Menge der restlichen Chemikalien ausgestattet ist.

3. - Chemikalienspender für Schwimmbecken nach Anspruch 2, wobei die Seitenwand der Schale weiter mit einem Thermometer (9) ausgestattet ist, um die Wassertemperatur nachzuweisen.

4. - Chemikalienspender für Schwimmbecken nach Anspruch 3, wobei die Anzahl der transparenten Fenster (8) zwei ist und das Thermometer (9) innerhalb von einem der zwei transparenten Fenster (8) eingebettet ist.

5. - Chemikalienspender für Schwimmbecken nach Anspruch 2, wobei eine untere Abdeckung (6) an den Boden der Schale geschraubt ist und die Umfangswände der unteren Abdeckung (6) und der Boden der Schale jeweils mit Gitterstrukturen (7) ausgestattet sind.

6. - Chemikalienspender für Schwimmbecken nach Anspruch 2, wobei die Schale eine Trommel (11), ein äußeres Gehäuse (12), das außerhalb der Trommel (11) aufgesteckt ist, umfasst und eine Region zum Montieren eines Schwimmers (4) zwischen der Trommel (11) und dem äußeren Gehäuse (12) gebildet ist

7. - Chemikalienspender für Schwimmbecken nach Anspruch 2, wobei die obere Abdeckung (2) eine äußere Abdeckung (21) umfasst, die das obere Ende der Schale abdeckt, eine innere Abdeckung (22), die im inneren Zirkel angeordnet ist, der in der äußeren Abdeckung (21) gebildet ist, und einen Kanal für den Durchgang der Tablettenklemme (3) in der inneren Abdeckung (22) in einem Eindringungsmodus gebildet ist.

8. - Chemikalienspender für Schwimmbecken nach Anspruch 7, wobei die Seitenwand des inneren Zirkels der äußeren Abdeckung (21) nach innen sinkt, um eine ringförmige abgestufte Oberfläche zu bilden, und das untere Ende der äußeren Kante der inneren Abdeckung (22) auf der ringförmigen abgestuften Oberfläche platziert ist.

9. - Chemikalienspender für Schwimmbecken nach Anspruch 6, wobei eine Seite des äußeren Gehäuses (12) mit einer Ringstruktur (13) ausgestattet ist.

## Revendications

1. - Distributeur de produit chimique pour piscine, comprenant un corps principal (1), un couvercle supérieur (2) qui recouvre l'ouverture supérieure du corps principal (1), une cavité de réception pour stocker des pastilles (5) étant formée à l'intérieur du corps principal (1) ; **caractérisé par le fait que** le distributeur de produit chimique pour piscine comprend en outre une pince à pastilles (3) ; l'extrémité de serrage de la pince à pastilles (3) pénètre vers le bas à travers le couvercle supérieur (2) et vient en butée contre les pastilles (5) en mode de fonctionnement, et la pince à pastilles (3) est munie de graduations ; la pince à pastilles (3) est apte à descendre en même temps que la dissolution des pastilles (5) et à afficher la quantité de produit chimique résiduel dans le corps principal (1).

2. - Distributeur de produit chimique pour piscine selon la revendication 1, dans lequel le corps principal (1) comprend une coque avec une ouverture à l'extrémité supérieure, et la cavité de réception est formée dans la coque ; la paroi latérale de la coque comporte au moins une fenêtre transparente (8) pour une observation directe de la quantité de produit chimique résiduel.

3. - Distributeur de produit chimique pour piscine selon la revendication 2, dans lequel la paroi latérale de la coque comporte en outre un thermomètre (9) pour mesurer la température de l'eau.

4. - Distributeur de produit chimique pour piscine selon la revendication 3, dans lequel le nombre de fenêtres transparentes (8) est deux, et le thermomètre (9) est encastré dans l'une des deux fenêtres transparentes (8).

5. - Distributeur de produit chimique pour piscine selon la revendication 2, dans lequel un couvercle inférieur (6) est vissé à la partie inférieure de la coque, et les parois périphériques du couvercle inférieur (6) et la partie inférieure de la coque comportent, respectivement, des structures de grille (7).

6. - Distributeur de produit chimique pour piscine selon la revendication 2, dans lequel la coque comprend un cylindre (11), un logement externe (12) emmanché à l'extérieur du cylindre (11), et une région pour monter un flotteur (4) est formée entre le cylindre (11) et le logement externe (12).

7. - Distributeur de produit chimique pour piscine selon la revendication 2, dans lequel le couvercle supérieur (2) comprend un couvercle externe (21) qui recouvre l'extrémité supérieure de la coque, un couvercle interne (22) disposé dans le cercle interne formé dans le couvercle externe (21), et un canal pour le passage de la pince à pastilles (3) est formé de manière traversante dans le couvercle interne (22).

8. - Distributeur de produit chimique pour piscine selon la revendication 7, dans lequel la paroi latérale du cercle interne du couvercle externe (21) rentre vers l'intérieur pour former une surface d'épaulement annulaire, et l'extrémité inférieure du bord externe du couvercle interne (22) est placée sur la surface d'épaulement annulaire.

9. - Distributeur de produit chimique pour piscine selon la revendication 6, dans lequel un côté du boîtier externe (12) comporte une structure de bague (13).
